# EUROPÄISCHE PATENTSCHRIFT

(11) **EP 0 711 188 B1**
(45) Veröffentlichungstag und Bekanntmachung des Hinweises auf die Patenterteilung: **28.05.1997**
(21) Anmeldenummer: 94924282.0
(22) Anmeldetag: 23.07.1994
(51) Int. Cl.: A62C 2/06

(54) **ROHRSCHOTT MIT EINEM UM EIN ROHR BIEGBAREN BLECHMANTEL**
PIPE SHUT-OFF DEVICE WITH A SHEET METAL CASING THAT MAY BE BENT AROUND A PIPE
DISPOSITIF D'OBTURATION POUR TUYAU POURVU D'UNE ENVELOPPE METALLIQUE ENROULABLE AUTOUR D'UN TUYAU

(30) Priorität: 31.07.1993 DE 4325757
(43) Veröffentlichungstag der Anmeldung: 15.05.1996
(73) Patentinhaber: Grünau Illertissen GmbH, D-89257 Illertissen (DE)
(72) Erfinder: GRAF, Robert, D-89281 Altenstadt-Filzingen (DE); ANNEMAIER, Dieter, D-89171 Illerkirchberg (DE)
(74) Vertreter: Hase, Christian
(86) Internationale Anmeldenummer: EP9402440
(87) Internationale Veröffentlichungsnummer: WO9503852

(56) Entgegenhaltungen:
- EP-A- 0 486 299
- DE-A- 3 930 722
- DE-U- 9 014 517
- GB-A- 2 216 220

## Beschreibung

Die Erfindung betrifft ein Rohrschott. Ein solches Rohrschott dient zum Schutz von Rohrdurchführungen durch Wände oder Decken. Bei dem Rohr handelt es sich in der Regel um ein Rohr aus thermoplastischem Kunststoff, insbesondere aus Polyvinylchlorid, Polyethylen und Polypropylen. Solche Rohre haben in der Regel einen kreisrunden Querschnitt, wobei im Bauwesen überwiegend Rohre mit einem Rohraußendurchmesser im Bereich von 32 bis 400 mm eingesetzt werden.

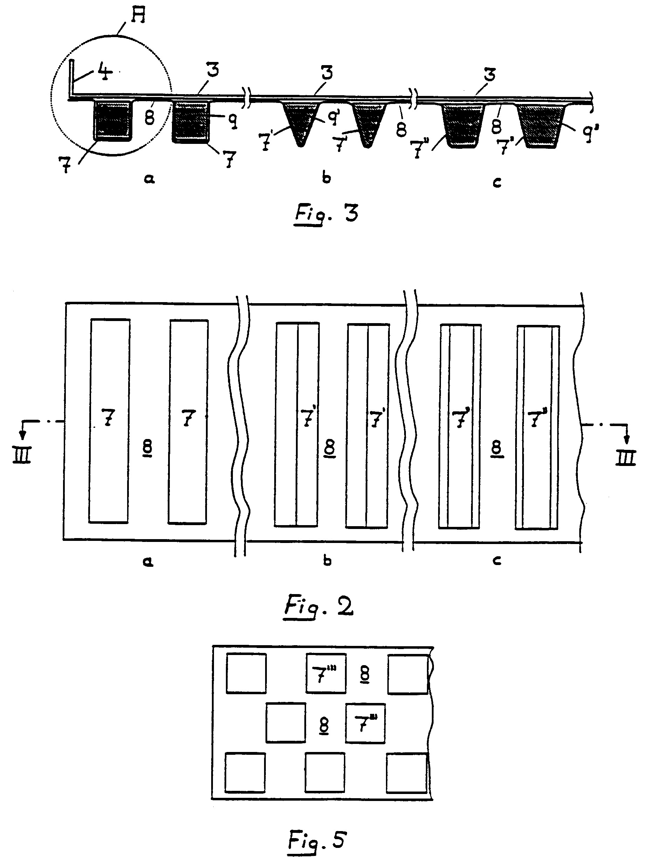

Die DE-U-9 014 517 zeigt ein Rohrschott entsprechend dem Oberbegriff des Anspruchs 1. Die quellmittelhaltigen Ansätze an der Innenseite des Blechmantels 10, die in diesem Dokument als Brandschutzpakete 12 bezeichnet werden, bestehen aus einzelnen tafelförmigen Behältern aus thermoplastischem Kunststoff, die mit dem Quellmittel gefüllt sind und an der Innenseite eines um das Rohr herum geführten, ringförmigen Bleches mit polygonalem Querschnitt anliegen. Nachteilig ist der Aufwand bei der Herstellung des bekannten Rohrschotts, da jeder Ansatz einzeln mittels zusätzlich erforderlichen Abkantungen 11 (siehe Figur 3) an der Innenseite des Bleches 10 angebracht werden muß.

Ein weiteres Rohrschott ist aus der GB-A-2 216 220 bekannt. Die Außen- und Innenseite werden von jeweils einer Kunststoffolie gebildet Zwischen den beiden ringförmig und konzentrisch um das Rohr angeordneten Folien liegen einzelne, ebenfalls in Folie verpackte Pakete mit dem Quellmittel ein (Figur 2 in diesem Dokument). Einen Zwischenschritt bei der Herstellung dieses Rohrschotts zeigt Figur 26. Die einzelnen Segmente 194 werden hier auf die mit Klebstoff beschichtete Außenfolie 196 geklebt. Nachteilig ist hier ebenfalls der erhöhte Aufwand bei der Herstellung und Montage, da zunächst das Quellmittel in einzelne Folienpakete verpackt und dann jedes einzelne Paket an der Innenfolie angebracht werden muß.

In der DE-39 30 722 A1 der Anmelderin ist ein Rohrschott beschrieben, das sehr gute brandschutztechnische Eigenschaften besitzt. Es ist jedoch für manche Anwendungszwecke zu komfortabel und erfordert eine auf den jeweiligen Rohrdurchmesser angepaßte Vorfertigung seiner Teile.

Die EP 0 486 299 A1 beschreibt eine biegbare Blechmanschette bzw. einen Blechmantel, der auf seiner Innenseite mit einem Band aus formbarem Quellmittel belegt ist. Dem Band kann noch ein Streifen aus plastischem Quellmittel zugeordnet sein, um ein dichtes Anlegen des das Quellmittel aufweisenden Blechmantels um das Rohr zu ermöglichen.

Es ist auch eine Abwandlung dieser Ausführung bekannt, bei der der Blechmantel an seiner Innenseite ausschließlich mit einer zähen Paste aus Quellmittel beschichtet ist.

Schließlich gibt es noch für die Ummantelung von Rohren oder Kabeln innerhalb von Mauerdurchbrüchen Endlosbänder von schmalen Tafeln aus festem Quellmittel auf Basis von Wasserglas, die zwischen zwei Folien eingeschweißt sind und um die zu schützenden Rohre bzw. Kabeln in einer oder mehreren Lagen gewickelt werden können. Die Wickel werden durch das sie umgebende Mauerwerk zusammengehalten.

Der Erfindung liegt die Aufgabe zugrunde, ein einfach und kostengünstig herzustellendes Rohrschott zu schaffen, das eine einfache Montage ermöglicht und gleichzeitig schnell und wirksam auf Hitze reagiert.

Diese Aufgabe wird von dem Rohrschott gemäß Anspruch 1 gelöst.

Die freien Abstände der quellmittelhaltigen Ansätze voneinander sind in mehrerer Hinsicht vorteilhaft. Sie erleichtern die Montage, sie erlauben im Brandfalle eine schnelle und weitgehend gleichmäßige Erwärmung des Quellmittels, so daß es sich schnell auszudehnen vermag und das Rohr zusammenquetscht bzw. eine gebildete Öffnung verschließt. Außerdem kann Quellmittel eingespart werden. Gute Quellmittel, die bevorzugt sind, haben ein Ausdehnungsvermögen von 1:10 oder mehr. Bei den bekannten Rohrschotts mit den volumenausfüllenden Mengen an Quellmittel wird demgegenüber erheblich mehr Quellmittel verwendet als erforderlich.

Die Ansätze an der Innenseite des Blechmantels sind zweckmäßigerweise nur in einer Lage vorhanden und haben vorzugsweise gleiche radiale Höhe. Sie können mit Vorteil als radiale Abstandhalter zwischen Blechmantel und Rohr ausgebildet sein. Sie haben dadurch in montiertem Zustand mechanischen und thermischen Kontakt mit dem von ihnen eingeschlossenen Rohr. Die Ansätze sind mit Vorteil mit dem Blechmantel bleibend verbunden, wodurch eine leichte Montage möglich ist. Der Abstand der Ansätze voneinander ist zweckmäßigerweise so groß, daß ein Biegen des Blechmantels auch um Rohre mit kleinem Außendurchmesser ohne gegenseitige Behinderung der Ansätze möglich ist.

Die Ansätze sind bei einer bevorzugten Ausführungsform an einem Haltemittel für die Quellmittelansätze, insbesondere an einer Folie, vorgesehen, aus deren Grundfläche sie vorzugsweise einseitig abstehen. Die Verwendung einer derartigen Folie erlaubt eine einfache Fertigung und Ausrichtung der quellmittelhaltigen Ansätze unter Festlegung der Abstände. Zur Ausrichtung können, insbesondere bei grobstückigen Quellmitteln, anstelle einer Folie auch offene Haltemittel, wie Netze oder Gitter, vorgesehen sein. Besonders bevorzugt ist es, wenn die Grundfläche der Folie an der Innenseite des Blechmantels anliegt, insbesondere mit dieser verbunden ist.

Dadurch wird ein leichtes Biegen des Blechmantels mit der die Ansätze aufweisenden Folie erreicht. Die Verbindung, die beispielsweise eine Verklebung sein kann, schafft eine unverlierbare Einheit aus Blechmantel und quellmittelhaltigen Ansätzen. Eine besondere Anpassung des Aufbaus des Rohrschotts an bestimmte Rohrdurchmesser ist nicht erforderlich. Ein und dieselbe Ausführung kann sowohl für kleine als auch für große Rohrdurchmesser Verwendung finden. Es braucht nur die Länge des Blechmantels mit den entsprechenden Ansätzen dem Rohraußenumf ang angepaßt zu werden. Der Blechmantel ist vorzugsweise streifenförmig ausgebildet, d.h. seine Länge in Umfangsrichtung ist in der Regel größer als seine Breite in axialer Richtung des Rohres.

Die Ansätze sind mit besonderem Vorteil als axiale Rippen ausgebildet. Der Mantel des erfindungsgemäßen Rohrschotts erhält dadurch im wesentlichen das Aussehen eines Patronengurtes. Das Verhältnis von Höhe zu Breite der Ansätze bzw. Rippen kann variieren. Zweckmäßigerweise liegt die Höhe, d.h. die radiale Erstreckung, der Ansätze in der gleichen Größenordnung wie ihre Breite. Vorzugsweise ist die Höhe sogar größer als die Breite, in der Regel aber nicht mehr als das 1,5-fache. Der Abstand der Ansätze voneinander liegt bei ungebogenem Blechmantel in dessen Umfangsrichtung zweckmäßigerweise im Mittel in der Größenordnung der Breite und/oder Höhe der Ansätze und wird auch von der Querschnittsform der Ansätze beeinflußt. Derartige Abstände reichen in der Regel aus, um einen weitgehenden Spielraum an die Anpassung an unterschiedliche Rohrdurchmesser zu ermöglichen.

Bei einer bevorzugten Ausführungsform der Erfindung liegt das Quellmittel im wesentlichen in Kontakt mit dem Blechmantel. Dieser Kontakt ermöglicht aufgrund der guten Wärmeleitung des Blechmantels eine gleichmäßige Wärmeübertragung auf das Quellmittel. Die Ansätze sind erfindungsgemäß von mit Quellmittel gefüllten Ausstülpungen der Folie gebildet. Diese Ausstülpungen können mit Quellmittel gefüllte Taschen sein. Das Quellmittel kann in diesen Ausstülpungen in unterschiedlicher Konsistenz vorliegen, wobei eine feste Form bevorzugt ist. Das Quellmittel kann pulver- oder granulatförmig vorliegen, dies insbesondere dann, wenn die Ausstülpungen allseits geschlossen sind, was durch Auflegen einer Abdeckfolie, insbesondere aber durch das Verbinden mit dem Blechmantel möglich ist.

Die Folie ist vorzugsweise eine Tiefziehfolie, wobei die Ausstülpungen durch Tiefziehen gebildet sind. Die Folie besteht vorzugsweise aus einem halogenfreien, tiefziehfähigen Material, insbesondere Polystyrol. Die Materialstärke liegt zweckmäßigerweise im Bereich von 0,5 bis 1 mm und kann, wenn gewünscht, auch größer sein. Die Folie ist mit Vorteil leicht um das Rohr biegbar, aber sonst im wesentlichen steif bzw. formstabil.

Bei einer bevorzugten Ausführungsform der Erfindung liegt das Quellmittel in Form von einstückigen Formkörpern vor, die vorzugsweise die Ausstülpungen der Folie vollständig ausfüllen. Bei dieser Ausführungsform ist es nicht erforderlich, die Ausstülpungen der Folie an der offenen Seite abzudecken. Mit besonderem Vorteil sind die Ausstülpungen dadurch gebildet, daß die Folie durch Tiefziehen um die Quellmittelstücke geformt ist. Die Folie liegt somit den Quellmittelstücken eng an und erfaßt diese. Mit Vorteil haben die Quellmittelstücke eine unregelmäßige Oberfläche und/oder weisen Hinterschneidungen auf. In dadurch gebildete Vertiefungen ist die Folie mit Vorteil mindestens teilweise eingezogen, wodurch eine gute mechanische Verankerung der Quellmittelstücke in den Ausstülpungen erreicht ist. Die Quellmittelstücke haben weiterhin zweckmäßigerweise eine im wesentlichen ebene Grundfläche. Diese kann mit Vorteil in der Grundfläche der Folie liegen. Im Querschnitt können die Ansätze und vorzugsweise auch die Quellmittelstücke, im wesentlichen rechteckig sein. Sie können bei bestimmten Ausführungsformen auch im Querschnitt dreieckig oder trapezförmig ausgebildet sein, wobei sie sich mit Vorteil in Richtung zum Rohr verjüngen. Die absolute Größe der Ansätze kann variieren. Ansätze mit einer Höhe im Bereich von 1,5 bis 2 cm und einer Breite von 1 bis 1,5 cm haben sich bewährt. Die radiale Länge der Ansätze richtet sich danach, ob sie rippenförmig ausgebildet oder in axialer Richtung unterbrochen oder versetzt sind. Die gesamte axiale Breite des Blechmantels liegt in der Regel zwischen ca. 7 und 10 cm. Mit dieser Breite ist das Rohrschott für unterschiedliche Rohrdurchmesser universell verwendbar. Bei besonders kleinen Rohrdurchmessern kann die Breite des Blechmantels auch geringer gehalten werden. Ebenso bei besonders großen Rohrdurchmessern entsprechend größer.

Das Quellmittel ist mit Vorteil witterungs- und wasserbeständig. Besonders geeignete Quellmittel bestehen aus Mischungen auf Basis von Blähgraphit, wie sie insbesondere in der DE 39 30 722 A1 beschrieben sind. Die Quellmittelzusammensetzung enthält vorzugsweise mindestens ein wärmewirksames, bei hohen Temperaturen beständiges Quellmittel, insbesondere Blähgraphit, ggf. in Kombination mit mindestens einem bei niederer Temperatur ansprechenden Quellmittel, sowie eine Bindemittelmischung aus wärmewirksamen Bindemitteln, die bei unterschiedlichen Temperaturen ansprechen.

Eine bevorzugte Quellmittelzusammensetzung enthält 5 bis 40 Gew.%, insbesondere 20 bis 30 Gew.% mindestens eines bei höheren Temperaturen ansprechenden Quellmittels, 0 bis 30 Gew.%, insbesondere 10 bis 25 Gew.% mindestens eines bei niedrigeren Temperaturen ansprechenden Quellmittels, 30 bis 90 Gew.%, insbesondere 50 bis 70 Gew.% einer bei abgestuften Temperaturen ansprechenden Bindemittelmischung und 0 bis 2 Gew.% eines hydrophobierenden Zusatzes, insbesondere hydrophobe Kieselsäure.

Das bei hoher Temperatur beständige Quellmittel kann anstelle von Blähgraphit zusätzlich noch Vermiculit und/oder Perlit enthalten. Blähgraphit ist als einziger Bestandteil jedoch bevorzugt. Das bei niedriger Temperatur ansprechende Quellmittel dient vorzugsweise dazu, schon bei Schwelbränden, die in der Regel bei mäßig hohen Temperaturen ablauf en, ein Aufblähen der Quellmittelmischung zu erreichen, wenn dies erwünscht ist. Eine geeignete, bei niedriger Temperatur ansprechende Quellmittelmischung kann in an sich bekannter Weise Phosphate, organische Stickstoff-Verbindungen und Kohlenhydrate enthalten.

Eine geeignete Bindemittelmischung enthält ca. 10 bis 50 Gew.% organisches Bindemittel, ca. 2 bis 20 Gew.% bei mittlerer Temperatur ansprechender Schmelzkleber und ca. 20 bis 45 Gew.% bei hoher Temperatur ansprechender Schmelzkleber, insbesondere Glas. Der Quelldruck der Quellmittelmischung kann beispielsweise bei 1,4 bar liegen.

Die Quellmittelmischung ist mit Vorteil durch ein duroplastisches Harz, insbesondere ein Epoxid, gebunden. Es können größere Platten aus der Quellmittelmischung geformt und dann auf die entsprechende Größe der Quellmittelstücke zugeschnitten werden. Es ist auch möglich, eine formbare und abbindbare Quellmittelmischung in entsprechende Formen zu geben und darin zu verfestigen. So können Haltemittel für das Quellmittel in Form von Vertiefungen oder Näpfe aufweisenden Folien vorgesehen sein, wie sie bei Noppenfolien und bei Einlagen in Pralinenschachteln zur Aufnahme von Pralinen bekannt sind. Solche Folien können durch Tiefziehen oder durch Walzen mit Loch-/Noppenwalzen in entsprechende Formen gebildet und auch sehr dünnwandig und flexibel sein. Die Vertiefungen können mit Quellmittel in flüssiger, pastöser oder kleinteiliger Form gefüllt werden, wonach das Quellmittel vorzugsweise ver festigt wird, z.B. durch Abbinden eines duroplastischen Harzes. Auch eine Formung durch Extrudieren ist möglich.

Sowohl der Blechmantel als auch die Folie mit den angeformten und mit Quellmittel gefüllten Ansätzen können in endloser Form hergestellt und miteinander verbunden werden. Es ist dann eine Ablängung der Mantellänge je nach den üblichen Rohrdurchmessern möglich. Der Blechmantel kann nach dem Umbiegen um das Rohr mittels eines Spannbandes zusammengehalten werden. Es ist auch möglich, an den Enden des Blechmantels nach außen stehende Abkantungen vorzusehen, die miteinander verschraubt oder auf sonstige Weise verspannt werden können. Weiterhin sind entlang einer Längskante des Blechmantels, die an einer Mauer oder einer Decke zur Anlage kommt, mit Vorteil radial nach außen ragende Laschen abgebogen, die Befestigungslöcher aufweisen können. An der freien Längskante des Blechmantels können radial nach innen gerichtete zahnförmige Abbiegungen vorgesehen sein, die ggf. eine zusätzliche mechanische Halterung für die quellmittelhaltigen Ansätze bilden und diese im montierten Zustand zwischen Blechmantel und umgebenes Rohr einschließen. Weiterhin kann dem Rohrschott noch eine Dichtmanschette zugeordnet sein, insbesondere an der einer Wand oder Decke zugewandten Seite. Diese Dichtmanschette kann aus einem schwer entflammbaren Material, insbesondere einem entsprechenden Schaumstoff, bestehen. Eine solche Dichtmanschette kann eine Abdichtung des Mauerdurchbruchs bewirken, insbesondere, wenn das Rohr nicht dicht im Durchbruch eingefaßt ist.

Weitere Merkmale der Erfindung ergeben sich aus der nachfolgenden Beschreibung von bevorzugten Ausführungsformen in Verbindung mit den Ansprüchen.

In der Zeichnung zeigen:
- Fig. 1: eine bevorzugte Ausführunsgform der Erfindung,
- Fig. 2: in schematischer Darstellung verschiedene Ausführungen eines quellmittelhaltige Ansätze aufweisenden Blechmantelabschnittes,
- Fig. 3: einen Schnitt entlang der Linie III-III nach Fig. 2,
- Fig. 4: die Einzelheit A nach Fig. 3,
- Fig. 5: eine weitere Ausführungsform der Erfindung mit versetzt angeordneten Ansätzen, und
- Fig 6: einen Abschnitt des Blechmantels mit zahnartigen Halterungen.

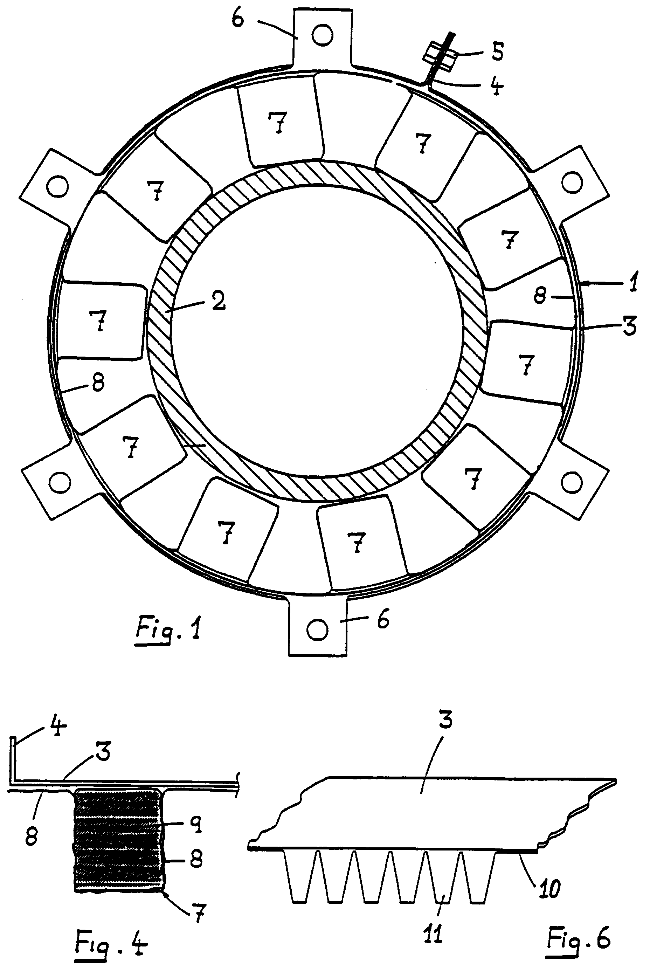

Die in Fig. 1 dargestellte Ausführungsform der Erfindung zeigt ein Rohrschott 1 auf einem Kunststoffrohr 2, wobei die einer Mauer mit Mauerdurchbruch zugewandte Seite zu sehen ist. Das Rohrschott 1 weist einen Metallmantel 3 aus biegsamem Blech auf. Der Blechmantel ist kreisförmig gebogen und besteht aus einem Blechstreifen, dessen Schmalseiten rechtwinklig nach außen abgebogene Laschen 4 aufweisen, die aneinanderliegen und durch Schraubmittel 5 miteinander verbunden sind. Aus der dem Mauerdurchbruch zugewandten Seite des Rohrschotts sind gelochte Befestigungslaschen 6 aus den Längsseiten des Blechmantels 3 abgebogen und dienen zur Befestigung des Rohrschotts an einer Mauer oder einer Decke. Von der Innenseite des Blechmantels 3 ragen in radialer Richtung zum Rohr 2 als Abstandhalter dienende Ansätze 7 mit rechteckigem Querschnitt, wobei die radiale Ausdehnung etwa das 1,25 fache der Breite der Ansätze beträgt. Die Ansätze 7 besitzen eine äußere Hülle aus einer Folie 8 und sind im Inneren mit riegel- bzw. rippenförmigen Stücken 9 aus festem Quellmittel gefüllt. Die Folie 8 wird von einem Folienband gebildet, das an der Innenseite des Blechmantels 3 anliegt und mit dieser durch Verklebung verbunden ist. Im Bereich der Ansätze 7 weist die Folie taschenförmige Ausstülpungen auf, die die Quellmittelstücke 9 umfassen. Der Abstand der Ansätze 7 entspricht an der Innenseite des Blechmantels 3 im wesentlichen der Breite der Ansatze. Im Bereich des Rohres sind die Abstände geringer und nur noch etwa halb so groß. Da die von der Folie gebildeten Taschen im Bereich der Ansätze 7 auf der der Innenseite des Blechmantels 3 zugewandten Seite offen sind, stehen die Quellmittelstücke 9 im wesentlichen in Kontakt mit dem Blechmantel 3.

Aus Fig. 1 ist zu ersehen, daß die das Quellmittel enthaltenden Ansätze 7 mit ihren Längsseiten jeweils freiliegen. Im Brandfalle werden sie deshalb von heißen Gasen schnell erhitzt und können so ihre Quellmittelwirkung entfalten. Durch die starke Aufquellung der Quellmittel werden dann die Zwischenräume zwischen den Ansätzen 7 geschlossen. Das Quellmittel drückt das Kunststoffrohr 2, wenn dieses durch die Hitzeeinwirkung erweicht wird, zu und verschließt damit den Mauerdurchbruch.

Aus Fig. 6 ist am Beispiel eines noch nicht gebogenen Blechmantels 3 zu ersehen, daß die von der Mauer abweisende Längskante 10 des Blechmantels 3 mit einer Zahnung 11 versehen sein kann, die in gebogenem Zustand radial in Richtung zum Rohr gerichtet ist. Diese Zahnung 11 bietet einen mechanischen Halt für die Ansätze 7 im Zwischenraum zwischen dem Blechmantel 3 und dem Rohr 2, auch dann, wenn die Folie 8 nicht mit dem Blechmantel verklebt ist oder wenn die Verklebung im Laufe der Zeit gelöst sein sollte.

Die Fig. 2 und 3 sind jeweils in Teilfiguren a), b) und c) unterteilt und zeigen die mit dem Blechmantel 3 verbundene Folie 8 in noch nicht gebogenem Zustand. Dabei sind verschiedene Ausführungen der Querschnittsform der Ansätze 7 bzw. Ausstülpungen und Quellmittelstücke 9 dargestellt. Die Teilfiguren a) zeigen einen rechteckigen Querschnitt der Quellmittelstücke 9 und der Ansätze 7 der Folie 8. Die Teilfiguren b) zeigen dreieckige Querschnitte der Quellmittelstücke 9' und der Ausstülpungen 7' und die Teilfiguren c) zeigen trapezförmige Querschnitte der Quellmittelstücke 9'' und der Ausstülpungen 7'' der Folie 8.

Fig. 4 zeigt die Einzelheit a) von Fig. 3 in vergrößertem Zustand. Dort ist erkennbar, daß die Quellmittelstücke 9 eine unregelmäßige Oberfläche aufweisen. Die Folie 8 ist durch Tiefziehen über die Quellmittelstücke 9 geformt und schmiegt sich dabei der Oberfläche der Quellmittelstücke 9 an. Dadurch wird eine mechanische Verankerung der Quellmittelstücke 9 in den Ausstülpungen bzw. Ansätzen 7 der Folie 8 erhalten.

Fig. 5 zeigt eine weitere Alternative der Form von Ansätzen 7'''. Die Ansätze 7''' haben eine im wesentlichen würfelförmige Gestalt und sind in axialer Richtung des Blechmantels in drei Reihen nebeneinander angeordnet, wobei die Reihen gegeneinander versetzt sind, so daß die Ansätze 7''' der nachfolgenden Reihe auf Lücke sitzen. Bei dieser Ausführung haben die Ansätze 7''' eine gegenüber der Rippenform vergrößerte Oberfläche, wodurch ein noch schnelleres Anspringen der Quellmittelwirkung im Brandfalle erreicht wird. Auch hier können die Ansätze, ähnlich wie in Fig. 3 dargestellt, im Querschnitt dreieckförmig oder trapezförmig ausgebildet sein. Auch zylinderförmige Ansätze (Noppen) mit rundem Querschnitt können vorgesehen sein, die mit dem Quellmittel auf geeignete Weise gefüllt sind.

## Patentansprüche

1. Rohrschott mit einem um ein Rohr (2) biegbaren Blechmantel (3) und einem an seiner Innenseite angeordneten Quellmittel (9), das im Brandfalle das Rohr (2) und/oder einen Mauerdurchbruch zu verschließen vermag, wobei der Innenseite des Blechmantels (3) im Abstand voneinander quellmittelhaltige Ansätze (7) zugeordnet sind,
**dadurch gekennzeichnet**,
daß die Ansätze (7) von mit Quellmittel (9) gefüllten Ausstülpungen einer Folie (8) gebildet werden.

2. Rohrschott nach Anspruch 1,
**dadurch gekennzeichnet**,
daß die Ansätze (7) als radiale Abstandshalter zwischen Blechmantel (3) und Rohr (2) ausgebildet sind.

3. Rohrschott nach Anspruch 1 oder 2,
**dadurch gekennzeichnet**,
daß die Ansätze (7) mit dem Blechmantel (3) verbunden sind.

4. Rohrschott nach einem der vorhergehenden Ansprüche,
**dadurch gekennzeichnet**,
daß der Abstand der Ansätze (7) bei ungebogenem Blechmantel (3) voneinander so groß ist, daß ein Biegen des Blechmantels (3) um Rohre (2) mit kleinem Außendurchmesser ohne gegenseitige Behinderung der Ansätze (7) möglich ist.

5. Rohrschott nach einem der vorhergehenden Ansprüche,
**dadurch gekennzeichnet**,
daß die Ansätze (7) an einer Folie (8) vorgesehen sind, aus deren Grundfläche sie vorzugsweise einseitig abstehen.

6. Rohrschott nach Anspruch 5,
**dadurch gekennzeichnet**,
daß die Grundfläche der Folie (8) an der Innenseite des Blechmantels (3) anliegt, vorzugsweise mit dieser verbunden ist.

7. Rohrschott nach Anspruch 5 oder 6,
**dadurch gekennzeichnet**,
daß die Folie (8), vorzugsweise gemeinsam mit dem Blechmantel (3), um das Rohr (2) biegbar, sonst aber im wesentlichen steif ist.

8. Rohrschott nach einem der vorhergehenden Ansprüche,
**dadurch gekennzeichnet**,
daß die Ansätze (7) als axiale Rippen ausgebildet sind.

9. Rohrschott nach einem der vorhergehenden Ansprüche,
**dadurch gekennzeichnet**,
daß die Höhe der Ansätze (7) in der Größenordnung ihrer Breite liegt, vorzugsweise größer als ihre Breite ist.

10. Rohrschott nach einem der vorhergehenden Ansprüche,
**dadurch gekennzeichnet**,
daß der Abstand der Ansätze (7) voneinander bei ungebogenem Blechmantel (3) in dessen Umfangsrichtung im Mittel in der Größenordnung der Breite bis Höhe der Ansätze (7) liegt.

11. Rohrschott nach einem der vorhergehenden Ansprüche,
**dadurch gekennzeichnet**,
daß das Quellmittel (9) im wesentlichen in Kontakt mit dem Blechmantel (3) steht.

12. Rohrschott nach einem der vorhergehenden Ansprüche,
**dadurch gekennzeichnet**,
daß die Folie (8) eine Tiefziehfolie ist und die Ausstülpungen durch Tiefziehen gebildet sind.

13. Rohrschott nach einem der vorhergehenden Ansprüche,
**dadurch gekennzeichnet**,
daß das Quellmittel (9) von einstückigen Festkörpern gebildet wird, die vorzugsweise die Ausstülpungen der Folie (8) vollständig ausfüllen.

14. Rohrschott nach Anspruch 13,
**dadurch gekennzeichnet,**
daß die Folie (8) durch Tiefziehen um die Quellmittelstücke (9) geformt ist.

15. Rohrschott nach Anspruch 13 oder 14,
**dadurch gekennzeichnet**,
daß die Quellmittelstücke (9) eine unregelmäßige Oberfläche und/oder Hinterschneidungen aufweisen, in die die Folie (8) mindestens teilweise eingezogen ist.

16. Rohrschott nach einem der Ansprüche 13 bis 15,
**dadurch gekennzeichnet**,
daß die Quellmittelstücke (9) eine im wesentlichen ebene Grundfläche aufweisen, vorzugsweise im Querschnitt im wesentlichen rechteckig, dreieckig oder trapezförmig sind.

17. Rohrschott nach einem der vorhergehenden Ansprüche,
**dadurch gekennzeichnet**,
daß das Quellmittel (9) witterungs- und wasserbeständig ist.

18. Rohrschott nach einem der vorhergehenden Ansprüche,
**dadurch gekennzeichnet**,
daß das Quellmittel (9) eine Mischung auf Basis von Blähgraphit ist.

19. Rohrschott nach einem der vorhergehenden Ansprüche,
**dadurch gekennzeichnet**,
daß der Blechmantel (3) und vorzugsweise auch die die Ausstülpungen aufweisende Folie (8) als langes Band gefertigt und durch Abschneiden in die gewünschte Länge gebracht sind.

## Claims

1. A pipe seal comprising a sheet-metal casing (3) bendable around a pipe (2) and a swelling compound (9) arranged on the inside thereof which, in the event of fire, is capable of sealing the pipe (2) and/or a wall channel, projections (7) containing swelling compound being associated at intervals from one another with the inside of the sheet-metal casing (3), characterized in that the projections (7) are formed by by bulges in a film (8) filled with swelling compound (9).

2. A pipe seal as claimed in claim 1, characterized in that the projections (7) are in the form of radial spacers between the sheet-metal casing (3) and the pipe (2).

3. A pipe seal as claimed in claim 1 or 2, characterized in that the projections (7) are joined to the sheet-metal casing (3).

4. A pipe seal as claimed in any of the preceding claims, characterized in that the intervals between the projections (7) before bending of the sheet-metal casing (3) are large enough to enable the sheet-metal casing (3) to be bent around pipes (2) with a small external diameter without the projections (7) interfering with one another.

5. A pipe seal as claimed in any of the preceding claims, characterized in that the projections (7) are provided on a film (8) from the bottom surface of which they project preferably on one side.

6. A pipe seal as claimed in claim 5, characterized in that the bottom surface of the film (8) is in contact with and preferably joined to the inside of the sheet-metal casing (3).

7. A pipe seal as claimed in claim 5 or 6, characterized in that the film (8) can be bent around the pipe (2), preferably together with the sheet-metal casing (3), but is otherwise substantially stiff.

8. A pipe seal as claimed in any of the preceding claims, characterized in that the projections (7) are in the form of axial ribs.

9. A pipe seal as claimed in any of the preceding claims, characterized in that the height of the projections (7) is of the same order as, and preferably greater than, their width.

10. A pipe seal as claimed in any of the preceding claims, characterized in that the interval separating the projections (7) from one another in the peripheral direction of the sheet-metal casing (3) before it is bent is on average of the same order as the width and/or height of the projections (7).

11. A pipe seal as claimed in any of the preceding claims, characterized in that the swelling compound (9) is substantially in contact with the sheet-metal casing (3).

12. A pipe seal as claimed in any of the preceding claims, characterized in that the film (8) is a thermoforming film and the bulges are formed by thermoforming.

13. A pipe seal as claimed in any of the preceding claims, characterized in that the swelling compound (9) is formed by one-piece mouldings which preferably completely fill the bulges in the film (8).

14. A pipe seal as claimed in claim 13, characterized in that the film (8) is formed by thermoforming around the pieces (9) of swelling compound.

15. A pipe seal as claimed in claim 13 or 14, characterized in that the pieces (9) of swelling compound have an uneven surface and/or undercuts into which the film (8) is at least partly drawn.

16. A pipe seal as claimed in any of claims 13 to 15, characterized in that the pieces (9) of swelling compound have a substantially flat bottom surface and are preferably substantially rectangular, triangular or trapezoidal in cross-section.

17. A pipe seal as claimed in any of the preceding claims, characterized in that the swelling compound (9) is weather- and water-resistant.

18. A pipe seal as claimed in any of the preceding claims, characterized in that the swelling compound (9) is a mixture based on expanded graphite.

19. A pipe seal as claimed in any of the preceding claims, characterized in that the sheet-metal casing (3) and preferably the film (8) formed with the bulges are made in the form of an endless strip and are cut to the required length.

## Revendications

1. Dispositif d'obturation pour tuyau avec une enveloppe de tôle (3) pliable autour d'un tuyau (2) et un l'agent gonflant, qui en cas d'incendie peut bloquer le tuyau (2) et/ou une ouverture dans la maçonnerie, la face interne de l'enveloppe de tôle (3) étant associée à des parties en saillies (7) contenant de l'agent gonflant et situées à une certaine distance les unes des autres,
caractérisé en ce que
les pièces en saillie (7) sont formées par des protubérances d'une feuille (8) remplies d'un agent gonflable (9).

2. Dispositif d'obturation pour tuyau selon la revendication 1,
caractérisé en ce que
les parties en saillie (7) sont réalisées sous forme d'intervalles radiaux entre l'enveloppe en tôle (3) et le tuyau (2).

3. Dispositif d'obturation pour tuyau selon les revendications 1 ou 2,
caractérisé en ce que
les parties en saillie (7) sont reliées à l'enveloppe en tôle (3).

4. Dispositif d'obturation pour tuyau selon une des revendications précédentes,
caractérisé en ce que
l'écartement des parties en saillie (7) lorsque l'enveloppe en tôle (3) n'est pas pliée est de grandeur telle, qu'un pliage de l'enveloppe de tôle (3) autour des tuyaux (2) est possible avec un petit diamètre extérieur sans empêchement mutuel des parties en saillie (7).

5. Dispositif d'obturation pour tuyau selon une des revendication précédentes,
caractérisé en ce que
les parties en saillie (7) sont prévues sur une feuille (8), en s'écartant de sa surface de base de préférence d'un seul côté.

6. Dispositif d'obturation pour tuyau selon la revendication 5,
caractérisé en ce que
la surface de base de la feuille (8) adhère à la face interne de l'enveloppe de tôle (3) et est de préférence reliée à celle-ci.

7. Dispositif d'obturation pour tuyau selon les revendications 5 ou 6,
caractérisé en ce que
la feuille (8) est de préférence pliable en commun avec l'enveloppe en tôle (3) autour du tuyau (2), mais en outre elle est essentiellement rigide.

8. Dispositif d'obturation pour tuyau selon une des revendications précédentes,
caractérisé en ce que
les parties en saillie (7) sont réalisées en nervures axiales.

9. Dispositif d'obturation pour tuyau selon une des revendications précédentes,
caractérisé en ce que
la hauteur des parties en saillie (7) se situe dans l'ordre de grandeur de leur largeur, de préférence il est plus haut que large.

10. Dispositif d'obturation pour tuyau selon une des revendications précédentes,
caractérisé en ce que
l'écartement des parties en saillie (7) les unes des autres, lorsque l'enveloppe en tôle (3) n'est pas pliée, se situe dans son sens périphérique en moyenne dans l'ordre de grandeur de la largeur à la hauteur des parties en saillie (7).

11. Dispositif d'obturation selon une des revendications précédentes,
caractérisé en ce que
l'agent gonflant (9) est essentiellement en contact avec l'enveloppe en tôle (3).

12. Dispositif d'obturation pour tuyau selon les revendications précédentes,
caractérisé en ce que
la feuille (8) est une feuille emboutie et les protubérances sont formées par emboutissage profond.

13. Dispositif d'obturation pour tuyau selon les revendications précédentes,
caractérisé en ce que
l'agent gonflant (9) est formé de corps solides en une pièce qui remplissent de préférence complètement les protubérances de la feuille (8).

14. Dispositif d'obturation pour tuyau selon la revendication 13,
caractérisé en ce que
la feuille (8) est formée par emboutissage profond autour des pièces d'agent gonflant (9).

15. Dispositif d'obturation pour tuyau selon les revendications 13 ou 14,
caractérisé en ce que
les pièces d'agent gonflant (9) ont une surface irrégulière et/ou des contre-dépouilles dans lesquelles la feuille (8) est au moins partiellement insérée.

16. Dispositif d'obturation pour tuyau selon les revendications 13 à 15,
caractérisé en ce que
les pièces d'agent gonflant (9) ont une surface de base essentiellement plane, de préférence elles ont une section transversale essentiellement rectangulaire, triangulaire ou trapézoïdale.

17. Dispositif d'obturation pour tuyau selon une des revendications précédentes,
caractérisé en ce que
l'agent gonflant (9) est résistant aux intempéries et à l'eau;

18. Dispositif d'obturation pour tuyau selon une des revendications précédentes,
caractérisé en ce que
l'agent gonflant (9) est un mélange à base de graphite expansif.

19. Dispositif d'obturation pour tuyau selon une des revendications précédentes,
caractérisé en ce que
l'enveloppe de tôle (3) et de préférence aussi la feuille (8) comportant les protubérances est fabriquée en une bande longue et est appliquée par découpage dans la longueur désirée.
